# DEMANDE DE BREVET EUROPEEN

(11) **EP 4 249 207 A1**
(43) Date de publication de la demande: **27.09.2023**
(21) Numéro de dépôt: 23161125.2
(22) Date de dépôt: 10.03.2023
(51) Int. Cl.: B29C 48/154, B29C 48/66, B29C 48/34, B29C 48/06, B29C 48/21

(54) **PROCÉDÉ DE FABRICATION D'UN CÂBLE ÉLECTRIQUE PAR EXTRUSION D'UNE COMPOSITION À BASE DE PARTICULES SOLIDES D'UN POLYMÈRE DE PROPYLÈNE COMPRENANT LA SÉLECTION DES PARTICULES SOLIDES EN FONCTION D'UN ATTRIBUT**

(30) Priorité: 22.03.2022 FR 2202527
(71) Demandeur: Nexans, 92400 Courbevoie (FR)
(72) Inventeur: PEREGO, Gabriele, 20144 Milan (IT); MAURI, Massimiliano, 1739 BORGENHAUGEN (NO)
(74) Mandataire: Ipsilon

(57) **Abrégé**

L'invention concerne un procédé de fabrication d'un câble électrique comprenant au moins un élément électriquement conducteur allongé et au moins une couche thermoplastique extrudée entourant ledit élément électriquement conducteur allongé, caractérisé en ce qu'il comprend au moins les étapes suivantes :
i) une étape de contrôle d'au moins un attribut d'au moins un polymère thermoplastique sous forme de particules solides choisi parmi un homopolymère de propylène et un copolymère de propylène,
ii) une étape de sélection de particules solides dudit au moins un polymère en fonction dudit au moins un attribut,
iii) une étape d'introduction d'une composition comprenant lesdites particules solides dudit au moins un polymère thermoplastique issues de l'étape ii) dans une zone d'alimentation d'une vis barrière située à l'entrée d'une extrudeuse, et
iv) une étape d'application au niveau de la tête de l'extrudeuse de la composition issue de l'étape iii) autour de l'élément électriquement conducteur allongé.

## Description

La présente invention concerne un procédé de fabrication d'un câble électrique, notamment du type câble d'énergie, comprenant une couche thermoplastique extrudée obtenue à partir d'une composition comprenant au moins un liquide diélectrique et au moins un polymère thermoplastique choisi parmi un homopolymère et un copolymère de propylène, ainsi qu'un câble obtenu par ledit procédé.

Elle s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Un câble de transport d'énergie à moyenne ou à haute tension comprend généralement de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ;
- un écran semi-conducteur entourant ladite couche semi-conductrice externe ; et
- éventuellement une gaine de protection électriquement isolante entourant ladite couche semi-conductrice externe.

En particulier, la couche électriquement isolante peut être une couche polymère à base d'une polyoléfine réticulée telle qu'un polyéthylène réticulé (XLPE) ou un élastomère réticulé d'éthylène-propylène ou d'éthylène propylène-diène. La réticulation est généralement effectuée lors de l'étape d'extrusion de la composition polymère autour de l'élément électriquement conducteur allongé. L'utilisation d'une polyoléfine réticulée permet de fournir une couche présentant des propriétés électriques et mécaniques satisfaisantes et de conduire à un câble pouvant fonctionner à une température supérieure à 70°C, voire égale à 90°C. Toutefois, plusieurs problèmes sont rencontrés. D'une part, les matériaux réticulés ne peuvent pas être recyclés. D'autre part, le processus de réticulation limite la vitesse de fabrication des câbles comportant une couche isolante à base de XLPE. En effet, pour obtenir un taux de réticulation satisfaisant, il faut que le polymère puisse être porté à la température requise pour obtenir sa réticulation pendant une durée suffisamment longue. Ainsi, la vitesse de production des câbles comportant une couche isolante à base de XLPE doit être ajustée de manière à ce que le temps de passage dans le tunnel de réticulation soit assez long pour obtenir un taux de réticulation satisfaisant, ce qui représente une limite contraignante non négligeable en termes de capacité de production. De plus, les réactions de réticulation ne doivent en aucun cas avoir lieu pendant l'extrusion du matériau à base de polyéthylène de façon à éviter tout risque de formation de particules de XLPE dans l'extrudeuse (vis, collier, tête de l'extrudeuse), dans la couche isolante ou dans la couche de semi-conducteur du câble et y créer des défauts. En effet, la présence de particules de XLPE affecte les propriétés finales du câble dans la mesure où ces particules génèrent un manque d'homogénéité, principalement du matériau de la couche isolante ou bien à l'interface entre la couche isolante et les couches semi-conductrices. Ce phénomène est connu sous la dénomination anglaise « scorch phenomena » pour phénomène de grillage.

L'utilisation de matériaux à base de LDPE pour les couches isolantes de câbles peut être une alternative à l'utilisation de matériaux à base de XLPE. Cependant, les matériaux à base de LDPE présentent l'inconvénient de ne pas pouvoir être utilisés à des températures supérieures à 70°C, ce qui a également pour conséquence de réduire leur capacité à transporter de l'énergie de façon à éviter toute surchauffe de la couche isolante à des températures supérieures à 70°C.

Par ailleurs, l'utilisation de matériaux à base de polypropylène pour les couches isolantes permet d'obtenir de très bonnes propriétés électriques, notamment en comparaison avec les couches à base de LDPE ou de XLPE. Toutefois, les câbles moyenne tension et haute tension utilisant le polypropylène comme couche d'isolant nécessitent des matières premières très propres. En effet, toute particule contaminante, qu'il s'agisse de particules de polypropylène endommagées ou défectueuses ou bien encore d'autres particules présente à l'intérieur ou à l'extérieur des particules de polypropylène, a des effets néfastes sur les propriétés électriques du câble. En particulier, les particules contaminantes peuvent entrainer des phénomènes de dégradation électriques tels que les décharges partielles qui réduisent la fiabilité du câble et peuvent aller jusqu'à la défaillance du câble. Or, le marché des matières premières pour le polypropylène n'est aujourd'hui pas assez mature pour fournir une qualité suffisante pour un prix satisfaisant. Il en résulte que les lots de particules de polypropylène conformes comprennent systématiquement des particules contaminantes dans un volume non négligeable et surtout dommageable pour les propriétés électriques du câble. Il y a donc une spécificité vis-à-vis des matières première pour le polypropylène.

Il existe donc un besoin pour une solution permettant d'améliorer les propriétés électriques d'une couche isolante d'un câble moyenne ou haute tension tout en conservant un coût de production raisonnable.

Pour cela, l'invention propose un procédé de fabrication d'un câble électrique comprenant au moins un élément électriquement conducteur allongé et au moins une couche thermoplastique extrudée entourant ledit élément électriquement conducteur allongé, ledit procédé mettant en oeuvre un dispositif comprenant au moins une extrudeuse contenant un fourreau, une vis barrière et une tête d'extrudeuse, caractérisé en ce qu'il comprend au moins les étapes suivantes :
i) une étape de contrôle d'au moins un attribut d'au moins un polymère thermoplastique sous forme de particules solides choisi parmi un homopolymère de propylène et un copolymère de propylène,
ii) une étape de sélection de particules solides dudit au moins un polymère en fonction dudit au moins un attribut,
iii) une étape d'introduction d'une composition comprenant lesdites particules solides dudit au moins un polymère thermoplastique issues de l'étape ii) et au moins un liquide diélectrique dans une zone d'alimentation de la vis barrière située à l'entrée de l'extrudeuse, et
iv) une étape d'application au niveau de la tête de l'extrudeuse de la composition issue de l'étape iii) autour de l'élément électriquement conducteur allongé.

Selon un mode de réalisation du procédé, l'étape de contrôle comprend une étape d'acquisition d'une pluralité d'images desdites particules solides dudit au moins un polymère thermoplastique et une étape de reconnaissance de particules solides présentant ledit au moins un attribut.

Selon un mode de réalisation du procédé, l'étape de sélection comprend la sélection d'une pluralité de particules solides présentant ledit au moins un attribut et le rejet des particules solides ne présentant pas ledit au moins un attribut, la pluralité de particules solides sélectionnées étant convoyées vers la zone d'alimentation de la vis barrière.

Selon un mode de réalisation du procédé, ledit au moins attribut est au moins l'un parmi : un attribut de couleur, un attribut de forme et un attribut de taille.

Selon un mode de réalisation du procédé, le dispositif comprend :
- un organe de convoyage depuis un réservoir de particules solides d'au moins un polymère thermoplastique,
- un organe d'acquisition d'images configuré pour acquérir des images de particules solides convoyées par l'organe de convoyage,
- un organe de traitement configuré pour identifier et sélectionner des particules solides en fonction dudit au moins un attribut,
- un organe de séparation configuré pour séparer la pluralité de particules solides présentant ledit au moins un attribut et le rejet des particules solides ne présentant pas ledit au moins un attribut.

Selon un mode de réalisation du procédé, le copolymère de propylène de l'étape i) est un copolymère hétérophasé de propylène, un copolymère statistique de propylène ou un de leurs mélanges.

Selon un mode de réalisation du procédé, la composition de l'étape iii) comprend en outre un polyéthylène sous forme solide.

Selon un mode de réalisation du procédé, le liquide diélectrique représente de 3 à 10% en masse, par rapport à la masse totale de la composition.

Selon un mode de réalisation du procédé, lors de l'étape i), la pression est d'au plus 5 bars, de préférence d'au plus 3 bars, et de préférence d'au plus 1,5 bars.

L'invention prévoit en outre un câble électrique comprenant au moins un élément électriquement conducteur allongé et au moins une couche thermoplastique extrudée entourant ledit élément électriquement conducteur allongé, caractérisé en ce qu'il est susceptible d'être obtenu selon un procédé de fabrication tel que décrit ci-avant.

### Brève description des dessins

Les dessins annexés illustrent l'invention :
[Fig. 1] représente schématiquement une vue partiellement en coupe d'un dispositif d'extrusion selon l'invention comprenant notamment une vis d'extrusion.
[Fig. 2] représente schématiquement une vue partiellement en coupe et en perspective d'un câble électrique selon l'invention.
[Fig. 3] représente schématiquement un organe de tri et de sélection de particules solides appartenant au dispositif d'extrusion de la figure 1.

### Description de mode(s) de réalisation

Pour des raisons de clarté, seuls les éléments essentiels pour la compréhension de l'invention ont été représentés de manière schématique sur ces figures, et ceci sans respect de l'échelle.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

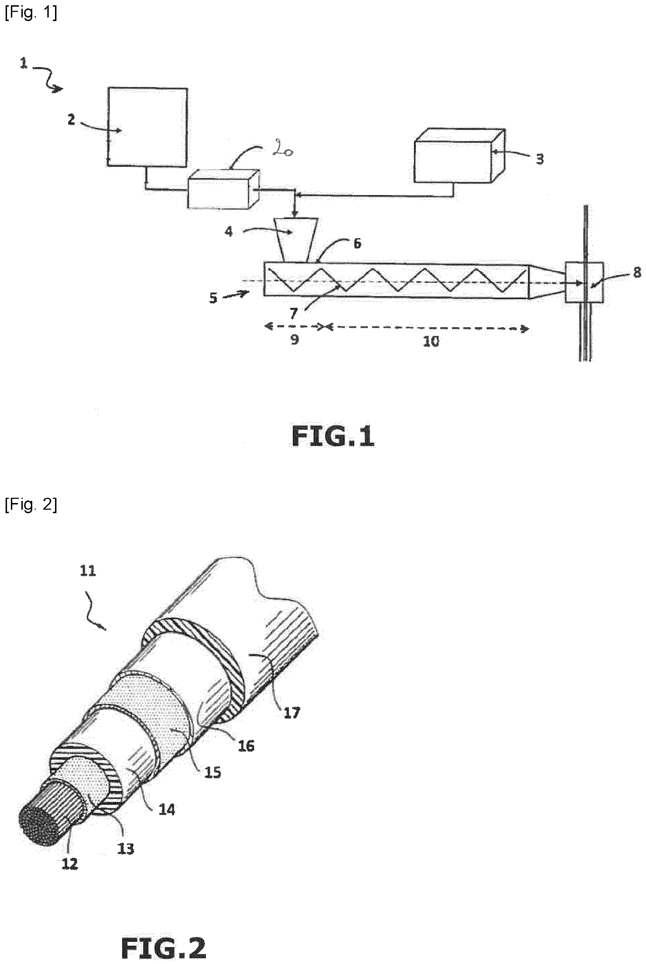

Sur la figure 1, le dispositif 1 comprend un premier container 2 pouvant être alimenté par des granulés d'un polymère thermoplastique choisi parmi un homo-et un copolymère de propylène, un deuxième container 3 pouvant être alimenté par un liquide diélectrique et une extrudeuse 5 comprenant par exemple un fourreau rainuré 6 et une vis barrière 7, ainsi qu'une tête d'extrudeuse 8.

Le polymère thermoplastique contenu dans le premier container 2 est sous forme sous forme de particules solides, appelés pellets ou granulés.

Le dispositif 1 peut également comprendre une trémie d'alimentation 4 pouvant être alimentée à température ambiante par les granulés du polymère thermoplastique contenues dans le premier container 2 et par le liquide diélectrique contenu dans le deuxième container 3.

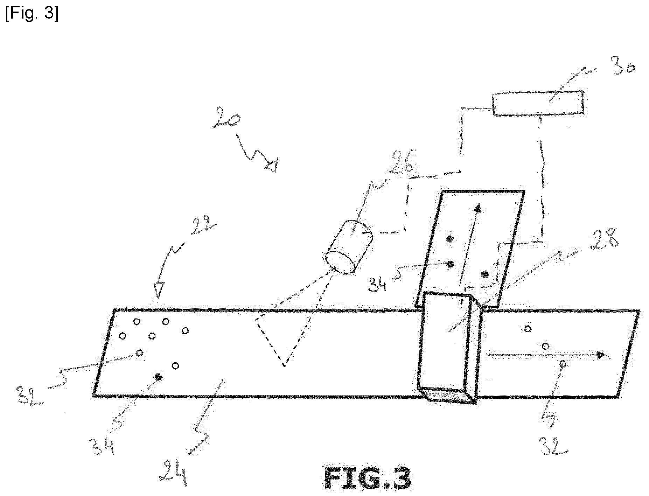

Le dispositif 1 comprend également un organe de contrôle et de sélection 20 disposé entre le premier container 2 et l'extrudeuse 5. L'organe de contrôle et de sélection 20 est configuré pour contrôler et sélectionner les granulés de polymère thermoplastique provenant du premier container 2 avant leur introduction dans l'extrudeuse 5. En effet, des particules indésirables ou des granulés non conformes de polymère thermoplastique peuvent être mélangés avec les granulés conformes de polymère thermoplastique. Un granulé non conforme est par exemple un granulé de polymère thermoplastique n'ayant pas une taille ou une forme prédéterminées. L'organe de contrôle et de sélection 20 est ainsi configuré pour identifier ces particules indésirables ou ces granulés non conformes et pour les séparer des granulés conformes. Un exemple de tel organe de tri et de sélection 20 est décrit plus en détails en lien avec la figure 3.

La composition comprenant les granulés du polymère thermoplastique et le liquide diélectrique est introduite dans une zone d'alimentation 9 de la vis selon de la zone d'alimentation 9 vers une ou plusieurs zones intermédiaires 10 permettant la fusion graduelle du polymère thermoplastique, lesdites zones intermédiaires 10 étant situées entre la zone d'alimentation 9 et la tête d'extrudeuse 8.

Enfin, au niveau de la tête d'extrudeuse 8, la composition est appliquée autour d'un élément électriquement conducteur allongé.

Sur la figure 2, le câble d'énergie 11 à moyenne ou haute tension obtenu selon le procédé de l'invention, comprend un élément électriquement conducteur allongé central 12, notamment en cuivre ou en aluminium, et, successivement et coaxialement comprend autour de cet élément 12, une première couche semi-conductrice 13 dite « couche semi-conductrice interne », une couche électriquement isolante 14, une deuxième couche semi conductrice 15 dite « couche semi-conductrice externe », un écran métallique 16 du type tube cylindrique, et une gaine extérieure de protection 17, la couche électriquement isolante 14 étant obtenue à partir d'une composition comprenant au moins un polymère thermoplastique choisi parmi un homopolymère de propylène et un copolymère de propylène, et un liquide diélectrique selon un procédé d'extrusion tel que défini dans l'invention.

Les couches 13 et 15 sont des couches extrudées par des procédés bien connus de l'homme du métier. La présence de l'écran métallique 16 et de la gaine extérieure de protection 17 est préférentielle, mais non essentielle.

Sur la figure 3, un exemple de réalisation de l'organe de tri et de sélection 20 est illustré.

L'organe de tri et de sélection 20 comprend un organe de convoyage 24 de particules 22 provenant du premier container 2. Comme indiqué ci-avant, ces particules 22 comprennent des granulés de polymère thermoplastique mais également des particules indésirables telles que des impuretés ou des granulés de polymère thermoplastique non conformes. L'organe de convoyage 24 permet le convoyage des particules 22 depuis le premier container 2 vers l'extrudeuse 5.

L'organe de tri et de sélection 20 comprend également un organe d'acquisition d'images 26 configuré pour acquérir des images des particules 22 convoyées par l'organe de convoyage 24. Pour cela, l'organe d'acquisition d'images 26 est dirigé en direction de l'organe de convoyage 24. L'organe d'acquisition est par exemple une caméra.

L'organe de tri et de sélection comprend également un organe de traitement 28 configuré pour recevoir la pluralité d'images acquises par l'organe d'acquisition d'images 26. L'organe de traitement 28 est également configuré pour identifier et sélectionner des particules solides. En particulier, l'identification des particules est réalisée en fonction d'au moins un attribut. Cet au moins un attribut peut être l'un ou plusieurs parmi un attribut de matériau, un attribut de couleur, un attribut de forme et un attribut de taille. Ainsi, l'organe de traitement 28 est configuré pour identifier toute particule d'une couleur, d'une forme et/ou d'une taille non-conformes. Ainsi, l'organe de traitement 28 permet d'identifier des particules conformes 32 et des particules non-conformes 34 parmi la pluralité de particules 22 provenant du premier container 2. Les particules conformes 32 présentent ledit au moins un attribut. A contrario, les particules non-conformes 34 ne présentent pas ledit au moins un attribut.

Les particules non-conformes 34 peuvent comprendre des granulés de polypropylène ayant des particules contaminantes sur leur surface extérieure ou à l'intérieur des granulés ou bien encore des granulés de polypropylène ayant une couleur altérée (e.g. de couleur noire, marron ou bien encore jaune). Le caractère altéré de la couleur des granulés peut dépendre du matériau considéré. En effet, la composition peut comprendre d'autres types de particules solides que le polypropylène, comme des granulés de Polyoléfine (PE) ou de polyéthylène à basse densité linéaire (LLDPE).

L'organe de tri et de sélection 20 comprend en outre un organe de séparation 30 configuré pour diriger les particules conformes 32 vers l'extrudeuse 5 et les particules non-conformes 34 vers une autre direction.

## Revendications

1. Procédé de fabrication d'un câble électrique comprenant au moins un élément électriquement conducteur allongé et au moins une couche thermoplastique extrudée entourant ledit élément électriquement conducteur allongé, ledit procédé mettant en oeuvre un dispositif comprenant au moins une extrudeuse contenant un fourreau, une vis barrière et une tête d'extrudeuse, **caractérisé en ce qu'**il comprend au moins les étapes suivantes :
i) une étape de contrôle d'au moins un attribut d'au moins un polymère thermoplastique sous forme de particules solides choisi parmi un homopolymère de propylène et un copolymère de propylène,
ii) une étape de sélection de particules solides dudit au moins un polymère en fonction dudit au moins un attribut,
iii) une étape d'introduction d'une composition comprenant lesdites particules solides dudit au moins un polymère thermoplastique issues de l'étape ii) dans une zone d'alimentation de la vis barrière située à l'entrée de l'extrudeuse, et
iv) une étape d'application au niveau de la tête de l'extrudeuse de la composition issue de l'étape iii) autour de l'élément électriquement conducteur allongé.

2. Procédé de fabrication selon la revendication 1, dans lequel l'étape de contrôle comprend une étape d'acquisition d'une pluralité d'images desdites particules solides dudit au moins un polymère thermoplastique et une étape de reconnaissance de particules solides présentant ledit au moins un attribut.

3. Procédé de fabrication selon la revendication 2, dans lequel l'étape de sélection comprend la sélection d'une pluralité de particules solides présentant ledit au moins un attribut et le rejet des particules solides ne présentant pas ledit au moins un attribut, la pluralité de particules solides sélectionnées étant convoyées vers la zone d'alimentation de la vis barrière.

4. Procédé de fabrication selon la revendication 2 ou 3, dans lequel ledit au moins attribut est au moins l'un parmi : un attribut de couleur, un attribut de forme et un attribut de taille.

5. Procédé de fabrication selon l'une quelconque des revendications précédentes, dans laquelle le dispositif comprend :
- un organe de convoyage depuis un réservoir de particules solides d'au moins un polymère thermoplastique,
- un organe d'acquisition d'images configuré pour acquérir des images de particules solides convoyées par l'organe de convoyage,
- un organe de traitement configuré pour identifier et sélectionner des particules solides en fonction dudit au moins un attribut,
- un organe de séparation configuré pour séparer la pluralité de particules solides présentant ledit au moins un attribut et le rejet des particules solides ne présentant pas ledit au moins un attribut.

6. Procédé selon l'une quelconque des revendications précédentes, dans lequel le copolymère de propylène de l'étape i) est un copolymère hétérophasé de propylène, un copolymère statistique de propylène ou un de leurs mélanges.

7. Procédé selon l'une quelconque des revendications précédentes, dans lequel la composition de l'étape iii) comprend en outre un polyéthylène sous forme solide.

8. Procédé selon l'une quelconque des revendications précédentes, dans lequel la composition comprend au moins un liquide diélectrique, représentant de préférence de 3 à 10% en masse, par rapport à la masse totale de la composition.

9. Procédé selon l'une quelconque des revendications précédentes, dans lequel lors de l'étape i), la pression est d'au plus 5 bars, de préférence d'au plus 3 bars, et de préférence d'au plus 1,5 bars.

10. Câble électrique (11) comprenant au moins un élément électriquement conducteur allongé (12) et au moins une couche thermoplastique extrudée (14) entourant ledit élément électriquement conducteur allongé, **caractérisé en ce qu'**il est susceptible d'être obtenu selon un procédé de fabrication tel que défini à l'une quelconque des revendications précédentes.
